(19) Europäisches Patentamt / European Patent Office / Office européen des brevets

(11) **EP 4 046 755 B1**

(12) **EUROPÄISCHE PATENTSCHRIFT**

(45) Veröffentlichungstag und Bekanntmachung des Hinweises auf die Patenterteilung:
**28.02.2024  Patentblatt 2024/09**

(21) Anmeldenummer: **22167762.8**

(22) Anmeldetag: **16.08.2013**

(51) Internationale Patentklassifikation (IPC):
**B25J 9/04** (2006.01)    **B25J 9/10** (2006.01)
**B25J 9/02** (2006.01)    **B25J 9/16** (2006.01)
**B25J 15/02** (2006.01)

(52) Gemeinsame Patentklassifikation (CPC):
**B25J 9/026; B25J 9/046; B25J 9/1015;
B25J 9/1676; B25J 9/1687; B25J 15/0253;**
G05B 2219/37567; G05B 2219/40053

(54) **VORRICHTUNG UND VERFAHREN ZUM AUTOMATISIERTEN ENTNEHMEN VON IN EINEM BEHÄLTER ANGEORDNETEN WERKSTÜCKEN**

DEVICE AND METHOD FOR THE AUTOMATED REMOVAL OF WORKPIECES ARRANGED IN A CONTAINER

DISPOSITIF ET PROCÉDÉ DE RETRAIT AUTOMATISÉ DE PIÈCES AGENCÉES DANS UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2012  DE 102012016537
06.08.2013  DE 102013013114**

(43) Veröffentlichungstag der Anmeldung:
**24.08.2022  Patentblatt 2022/34**

(62) Dokumentnummer(n) der früheren Anmeldung(en) nach Art. 76 EPÜ:
**13004082.7 / 2 698 234**

(73) Patentinhaber: **Liebherr-Verzahntechnik GmbH
87437 Kempten (DE)**

(72) Erfinder:
• **Mattern, Thomas
87669 Rieden (DE)**
• **Hänschke, David
87452 Altusried (DE)**
• **Riedmiller, Bernhard
87497 Wertach (DE)**
• **Mundt, Alois
87435 Kempten (DE)**

(74) Vertreter: **Behr, Wolfgang
Lorenz Seidler Gossel
Rechtsanwälte Patentanwälte
Partnerschaft mbB
Widenmayerstraße 23
80538 München (DE)**

(56) Entgegenhaltungen:
**EP-A2- 1 442 848        WO-A2-01/51259
CN-A- 101 559 597      DE-A1-102005 058 867
JP-A- 2005 014 108      US-A- 5 835 623
US-A1- 2012 063 873**

EP 4 046 755 B1

**Beschreibung**

Die vorliegende Erfindung betrifft eine Vorrichtung zum automatisierten Entnehmen von in einem Behälter angeordneten Werkstücken. Insbesondere dient die Vorrichtung dabei dazu, Gegenstände, deren Position nicht vorher bekannt ist, sicher und gezielt aus einem Behälter zu entnehmen. Solche Vorrichtungen sind allgemein unter dem Begriff "Griff in die Kiste" bekannt geworden.

Übliche Vorrichtungen zum automatisierten Entnehmen von in einem Behälter angeordneten Werkstücken umfassen dabei eine Erfassungseinheit zum Erfassen der Werkstücke und einen über einen Roboterarm mit sechs Achsen bewegbaren Greifer zum Greifen und Entnehmen der Werkstücke aus dem Behälter. Dabei ist eine Steuerung vorgesehen, welche die Daten der Erfassungseinheit auswertet, die Bewegungsbahn des Roboterarms plant und diesen entsprechend ansteuert. Zum Bewegen des Greifers wird dabei gemäß dem Stand der Technik üblicherweise ein standardisierter Industrieroboter eingesetzt.

Druckschrift CN 101559597 A zeigt einen Portalmanipulator, bei welchem ein Manipulator über mehrere Schwenkachsen an einem Flächenportal angeordnet ist.

JP 2005 014108 A zeigt Roboter mit sieben oder mehr Achsen. DE 10 2005 058 867 A1 zeigt einen Roboterarm mit Zusatzachsen zum Bewegen einer Kamera entlang einer Bewegungsbahn. WO 01/51259 A2 zeigt einen Roboterarm, welcher modular aus einer Mehrzahl von Achselementen aufgebaut ist, welche jeweils ohne eigenen Antrieb auskommen.

Druckschrift EP 1 442 848 A2 zeigt eine Vorrichtung zum automatisierten Entnehmen von in einem Behälter angeordneten Werkstücken, bei welcher der Greifer über eine weitere Schwenkachse, durch welche die Ausrichtung des Greifers verändert werden kann, an einem Roboterarm angeordnet ist. US 2012/0063873 A1 zeigt ebenfalls eine Vorrichtung zum automatisierten Entnehmen von in einem Behälter angeordneten Werkstücken mit einer Zusatzachse.

US 5,835,623 zeigt eine Vorrichtung zum automatisierten Handhaben von Werkstücken, wobei ein Greifer an einem Flächenportal angeordnet ist.

Die Erfinder der vorliegenden Erfindung haben jedoch erkannt, dass mit einer solchen Anordnung ein zuverlässiges und prozesssicheres Entnehmen von Werkstücken aus einem Behälter nicht immer möglich ist.

Aufgabe der vorliegenden Erfindung ist es daher, Vorrichtungen zum automatisierten Entnehmen von in einem Behälter angeordneten Werkstücken zur Verfügung zu stellen, welche die Prozesssicherheit beim Entnehmen der Werkstücke aus dem Behälter erhöhen.

Diese Aufgabe wird erfindungsgemäß durch eine Vorrichtung gemäß Anspruch 1 gelöst.

Vorteilhafte Ausgestaltungen der vorliegenden Erfindung sind Gegenstand der Unteransprüche.

Die vorliegende Erfindung umfasst eine Vorrichtung zum automatisierten Entnehmen von in einem Behälter angeordneten Werkstücken, welche eine Erfassungseinheit zum Erfassen der Werkstücke und einen Greifer zum Greifen und Entnehmen der Werkstücke aus dem Behälter umfasst. Weiterhin ist eine Steuerung zur Auswertung der Daten der Erfassungseinheit, zur Bahnplanung und zur Ansteuerung des Greifers vorgesehen. Erfindungsgemäß ist der Greifer über ein Flächenportal mit mindestens zwei, bevorzugt drei Linearachsen und mindestens zwei zusätzlichen rotatorischen Achsen bewegbar.

Die Erfinder der vorliegenden Erfindung haben dabei erkannt, dass alternativ zu den aus dem Stand der Technik bekannten Roboterarmen mit sechs Schwenkachsen auch ein Flächenportal eingesetzt werden kann, wenn dieses mit mindestens zwei zusätzlichen rotatorischen Achsen ausgestattet wird.

Die Erfinder der vorliegenden Erfindung haben dabei erkannt, dass durch die Verwendung von zwei zusätzlichen rotatorischen Bewegungsachsen ein erheblich besserer Entnahmegrad erreicht werden kann, vor allem bei nicht symmetrischen oder nicht rotationssymmetrischen Teilen. Insbesondere können Werkstücke auch dann sicher entnommen werden, wenn diese in ungünstigen Positionen beispielsweise am Behälterrand oder tief unten im Behälter angeordnet sind. Dabei reduziert sich durch das erfindungsgemäße Greifarmelement der Platz, welcher zum Greifen in der Kiste benötigt wird. Mit der hierdurch gesteigerten Zugänglichkeit geht ein höherer Entnahmegrad einher, d.h. die Anzahl der Teile, welche ohne zusätzliche Maßnahmen gegriffen werden können. Weiterhin werden die Kollisionskonturen mit der Kiste verringert.

Bevorzugt ist der Greifer an einem Greifarmelement angeordnet, welches zusätzlich zu den Bewegungsachsen des Flächenportals mindestens eine und bevorzugt zwei weitere Bewegungsachsen zur Verfügung stellt.

Durch die damit insgesamt vorhandenen Bewegungsachsen ergibt sich eine noch höhere Flexibilität und Genauigkeit beim Ansteuern des Greifers.

Darüber hinaus kann das mit dem Greifarmelement ausgestattete Flächenportal insgesamt zusätzlich zu den beiden rotatorischen Achsen mindestens zwei weitere Bewegungsachsen, und insbesondere zwei weitere rotatorische Achsen, aufweisen, so dass die Vorrichtung insgesamt mindestens 6 Achsen aufweist.

Bei den erfindungsgemäß vorgesehenen zusätzlichen Achsen handelt es sich bevorzugt um rotatorische Achsen, d.h. entweder um Drehachsen, welche eine Drehbewegung von 360° zulassen, oder um Schwenkachsen mit einem kleineren Schwenkbereich.

Das eingesetzte Greifarmelement weist dabei besonders bevorzugt mindestens zwei rotatorische Achsen auf, und insbesondere ein Dreh- und ein Schwenkwerk. Insbesondere kann das Drehwerk dabei zwischen dem Greifer und dem Schwenkwerk angeordnet sein.

Besonders bevorzugt wird damit zum Bewegen des Greifers ein Flächenportal eingesetzt, an welchem das Greifarmelement angeordnet ist und damit mindestens zwei weitere rotatorische Achsen zur Verfügung stellt. Besonders bevorzugt ist in diesem Fall noch eine weitere rotatorische Achse, insbesondere eine Drehachse, vorgesehen.

Die vorliegende Erfindung kann dabei mit beliebigen Greifern eingesetzt werden. Insbesondere kann es sich dabei beim Greifer um einen magnetischen, um einen pneumatischen und/oder um einen mechanischen Greifer handeln.

Besonders bevorzugt kommt die vorliegende Erfindung dabei mit einem mechanischen Greifer zum Einsatz, da dieser eine besonders hohe Greifgenauigkeit ermöglicht. Zudem erlauben die erfindungsgemäß vorgesehenen zusätzlichen Achsen ein besonders exaktes Heranfahren des Greifers an die Greifzone des zu greifenden Werkstückes. Hierdurch wird ein sicheres Greifen der Werkstücke im Behälter auch in schwierigen Greifsituationen möglich.

Insbesondere kann es sich bei dem Greifer dabei um einen Fingergreifer, beispielsweise um einen Zweifingergreifer handeln.

In einer Ausgestaltung der Erfindung kann der Greifer dabei gekröpft an dem Greifarmelement angeordnet sein. Eine solche gekröpfte Anordnung des Greifers ermöglicht ein vereinfachtes Greifen von Werkstücken, welche beispielsweise nahe an einer Behälterinnenwand angeordnet sind.

Insbesondere kann dabei die Mittelachse der Greifzone des Greifers gegenüber der Drehachse der letzten rotatorischen Achse versetzt angeordnet sein.

Besonders bevorzugt bilden dabei weiter oben am Greifarm angeordnete Elemente keine Störkanten im Hinblick auf den Greifer. Hierdurch wird verhindert, dass der Greifer nicht in die gewünschte Position zugestellt werden kann.

Insbesondere kann es sich bei dem Greifer um einen Finger- und/oder einen Backengreifer handeln, dessen Greiffinger bzw. Greifbacken an einer Außenkante des Greifers angeordnet sind. Hierdurch kann der Greifer auch ganz bis an die Seitenwände des Behälters hin zuverlässig greifen. Insbesondere kann es sich dabei um einen Zweifingergreifer bzw. um einen Zweibackengreifer handeln. Vorteilhafterweise ist dabei die Verbindungslinie zwischen den zwei Fingern bzw. den zwei Backen gegenüber der Drehachse der letzten rotatorischen Achse und insbesondere des letzten Drehgelenks nach außen versetzt. Insbesondere kann dabei die Verbindungslinie tangential zu der Drehachse der letzten rotatorischen Achse verlaufen.

In einer weiteren bevorzugten Ausgestaltung der vorliegenden Erfindung ist das Greifarmelement so am Flächenportal angeordnet, dass zum Greifen von Werkstücken immer nur der Greifarm und ggf. der letzte Schwenkarm des Flächenportals, an welchem der Greifarm angeordnet ist, in den Behälter hineingeführt werden müssen, selbst wenn das zu greifende Werkstück am Boden des Behälters angeordnet ist. Insbesondere bildet das Greifarmelement dabei eine Greifarmverlängerung, wobei die Länge des Greifarms ggf. zusammen mit der Länge des Flächenportals, an welchem der Greifarm angeordnet ist, gleich oder größer ist als die Höhe der Seitenwände des Behälters. Die weiter oben angeordneten Teile des Flächenportals bilden somit keine Störkanten, welche berücksichtigt werden müssten.

Das eingesetzte Greifarmelement weist, wie oben bereits dargestellt, bevorzugt ein Dreh- und ein Schwenkwerk auf, wobei das Drehwerk zwischen dem Greifer und dem Schwenkwerk angeordnet ist und damit die letzte Achse des Greifarmelementes bildet.

Die beiden rotatorischen Achsen des Greifarmelementes stehen dabei bevorzugt senkrecht aufeinander und kreuzen sich besonders bevorzugt. Bevorzugt sind die beiden rotatorischen Achsen dabei möglichst nahe am Greifer angeordnet, so dass sich ein kompakter Aufbau ergibt.

Weiterhin bevorzugt weist das Greifarmelement in Bezug auf den Behälter und/oder die Werkstücke, welche gegriffen werden sollen, solche Abmessungen auf, dass das Greifarmelement unabhängig von der Position des zu greifenden Werkstückes innerhalb des Behälters in der zum Greifen notwendigen Greifposition in den Behälter eingeführt werden kann.

Hierfür ist insbesondere die maximale Kröpfung K des Greifers in Bezug auf die vorletzte rotatorische Achse, welche bevorzugt eine Schwenkachse darstellt, von entscheidender Bedeutung.

Da die Kröpfung K des Greifers in Bezug auf die vorletzte rotatorische Achse in Abhängigkeit von der Schwenkstellung dieser Achse sowohl von der Länge des Abschnittes des Greifarmelementes zwischen der letzten und der vorletzten rotatorischen Achse als auch von der Länge des Abschnittes des Greifarmelementes zwischen der letzten rotatorischen Achse und dem Greifer abhängt, ist die maximale Kröpfung K dabei als der maximale Abstand zwischen der Außenkante der vorletzten Achse des Greifarmelementes und der Außenkante des Greifers inklusive den Greifelementen definiert.

Bevorzugt weist das Greifarmelement in Bezug auf den Behälter dabei die Abmessungen

$$K < W/2$$

auf, wobei K den maximalen Abstand zwischen der Außenkante der vorletzten Achse des Greifarmelementes und der Außenkante des Greifers darstellt, und W die Länge der kleineren Seitenfläche des Behälters. Bevorzugt weist der Behälter dabei eine rechteckige Grundfläche auf.

Weiterhin bevorzugt weist das Greifarmelement in Bezug auf den Behälter und das Werkstück die Abmessungen

$$K < (W-Bw)/2$$

auf, wobei Bw die Dicke des Werkstückes in Eingreifrichtung des Greifers in das Werkstück darstellt, d.h. in der Richtung, in welcher der Greifer zum Greifen an bzw. in das Werkstück herangefahren wird. Bei einem Fingergreifer wäre dies die Richtung, in welcher die Greiffinger in das Werkstück gefahren werden.

Weiterhin bevorzugt weist das Greifarmelement in Bezug auf das Werkstück die Abmessungen

$$Lg < Lw$$

auf, wobei Lg die Länge des Greifers in Bewegungsrichtung der Greifelemente des Greifers, insbesondere in Richtung der Verbindungslinie zwischen den zwei Fingern bzw. den zwei Backen eines Zwei-Finger-Greifers oder eines Zwei-Backen-Greifers, darstellt, und Lw die maximale Länge des Werkstückes in einer Verbindungsrichtung zwischen zwei Greifpunkten des Werkstückes darstellt.

Der Behälter und/oder die Werkstücke können dabei Teil der erfindungsgemäßen Vorrichtung sein, welche damit ein System mit diesen Komponenten bildet.

Weiterhin kann eine Ausgleichseinheit vorgesehen sein, welche bei Kollisionen des Greifers eine Ausweichbewegung erlaubt. Eine solche Ausgleichseinheit verhindert eine Überlastung der Bewegungsmechanik und sorgt zudem dafür, dass ohne häufige Systemstops gearbeitet werden kann.

Insbesondere ist die Ausgleichseinheit dabei so aufgebaut, dass diese bis zu einer gewissen ersten Grenzbelastung starr ist, so dass eine eindeutige Position des Greifers im Hinblick auf die Bewegungsachsen definiert ist. Insbesondere ist diese erste Belastung dabei höher als die durch das Eigengewicht des Greifers bzw. des Greifarms ausgeübte Belastung und/oder die Belastungen im Normalbetrieb. Hierdurch löst die Ausgleichseinheit erst dann aus, wenn eine Kollision eintritt. Vorteilhafterweise wird der Greifarm dabei noch um eine definierte Wegstrecke weiterbewegt, wenn eine Kollision durch ein Auslösen der Ausgleichseinheit detektiert wird.

Vorteilhafterweise ist die Ausgleichseinheit so angeordnet, dass sie eine Ausweichbewegung des gesamten erfindungsgemäßen Greifarmelementes mit dem mindestens ein und vorteilhafterweise mindestens zwei weiteren Bewegungsachsen erlaubt. Insbesondere kann die Ausgleichseinheit dabei zwischen dem Flächenportal und dem Greifarmelement angeordnet sein.

Alternativ oder zusätzlich kann auch eine in dem Greifarmelement integrierte Ausgleichseinheit vorgesehen sein, insbesondere zum Ausgleich von rotatorischen Bewegungen.

Erfindungsgemäß kann vorgesehen sein, dass die Steuerung die beiden Achsen des Greifarmelementes als reine Stellachsen ansteuert. Hierdurch ergibt sich trotz der zwei weiteren Achsen eine einfache Ansteuerung, bei welcher bspw. auf Standardsoftware zum Ansteuern des Roboterarms zurückgegriffen werden kann. Insbesondere kann die Steuerung erfindungsgemäß lediglich die notwendige Endposition der Achsen des Greifarmelementes berechnen, welche ein Greifen des Werkstückes erlauben. Bevorzugt werden die beiden Achsen des Greifarmelementes dabei an ihre Zielposition gestellt, bevor das Heranfahren des Greifers an das zu greifende Werkstück erfolgt.

Weiterhin kann vorgesehen sein, dass die Steuerung die Zustellung des Greifers an das Werkstück über eine Ansteuerung der übrigen Achsen veranlasst. Insbesondere werden die übrigen Achsen dabei vorteilhafterweise so angesteuert, dass der Greifer ohne Kollision an das Werkstück herangefahren wird.

Weiterhin kann vorgesehen sein, dass die Position der Stellachsen des Greifarmelementes von der Steuerung lediglich im Hinblick auf die geänderte Position des Greifers in Bezug auf das Flächenportal und/oder die durch die Verstellung der Stellachsen geänderten Störkanten des Greifarms berücksichtigt wird.

Insbesondere kann so eine vorhandene Steuersoftware zum Ansteuern des Flächenportales eingesetzt werden, und dabei auf die übliche Bahnplanung zurückgegriffen werden, wobei das Greifarmelement lediglich im Hinblick auf die geänderte Position des Greifers in Bezug auf das Flächenportal und die geänderten Störkantendes Greifarms berücksichtigt wird.

Alternativ kann vorgesehen sein, dass die zusätzlichen Achsen als zusätzliche vollwertige NC-Achsen in der Robotersteuerung integriert sind und damit eine synchrone Bewegung zulassen.

Insbesondere kann die erfindungsgemäße Vorrichtung der automatisierten Positionierung der entnommenen Werkstücke an einer Zielaufnahme dienen, wobei die Steuerung den Greifer so bewegt, dass die Werkstücke von dem Behälter aus direkt an der Zielaufnahme angeordnet werden. Die zusätzlichen Achsen gemäß der vorliegenden Erfindung erlauben die hierfür notwendige Greifgenauigkeit.

Die Vorrichtung gemäß der vorliegenden Erfindung kann dabei zum Handhaben beliebiger Werkstücke eingesetzt werden. Insbesondere kann die erfindungsgemä-ße Vorrichtung dabei auch zum Handhaben von Werkstücken eingesetzt werden, welche nur eine oder eine bestimmte Anzahl von fest definierten Greifzonen aufweist, welche durch den Greifer genau angefahren werden müssen.

Die Werkstücke können dabei aus beliebigen Materialien gefertigt sein, beispielsweise aus Metall, aus Kunststoff oder aus einer Kombination aus Metall und Kunststoff. Insbesondere kann es sich dabei auch um Werkstücke handeln, welche nur in einem Teilbereich eine Greifzone aufweisen. Beispielsweise kann es sich dabei um Werkstücke handeln, welche nur in einem Teilbereich aus Metall gefertigt sind, und welche in diesem Teilbereich durch einen magnetischen Greifer gegriffen werden müssen.

Die Werkstücke können dabei erfindungsgemäß ungeordnet im Behälter angeordnet sein, und dennoch sicher gegriffen werden. Die erfindungsgemäße Erfassungseinheit ermittelt dabei zunächst Daten in Bezug auf die Werkstücke im Behälter, wobei die Steuerung anhand dieser Daten einzelne Werkstücke identifiziert und aus diesen Werkstücken ein Werkstück auswählt, welches gegriffen werden soll. Anhand der Positionsdaten des zum Greifen ausgewählten Werkstücks erfolgt dann eine Bahnplanung für die Bewegungsachsen, über welche der Greifer an das Werkstück herangefahren werden soll. Bei der Bahnplanung erfolgt dabei vorteilhafterweise eine Kollisionsüberprüfung, welche sicherstellt, dass der Greifer bzw. der Greifarm bei der Bewegung zum Werkstück hin nicht mit Störkanten wie beispielsweise anderen Werkstücken oder den Behälterwänden kollidiert.

Zum Erfassen der Werkstücke kann dabei erfindungsgemäß ein optisches System eingesetzt werden, besonders bevorzugt ein Laserscanner, insbesondere ein 3D-Laserscanner. Die Erfassungseinheit kann dabei insbesondere oberhalb des Behälters angeordnet sein.

Die Vorrichtung kann besonders bevorzugt so angesteuert werden, dass die im Behälter befindlichen Werkstücke immer dann erfasst werden, wenn ein Werkstück entnommen wurde und gerade an einer Zielaufnahme abgelegt wird. Hierdurch kann das nächste zu greifende Werkstück identifiziert und ausgewählt werden, anhand dessen dann die Bahnplanung für den nächsten Greifvorgang erfolgt.

Die vorliegende Erfindung umfasst weiterhin ein Verfahren gemäß Anspruch 11 zum automatisierten Entnehmen von in einem Behälter angeordneten Werkstücken, mit den Schritten: Erfassen der Werkstücke; Greifen eines Werkstückes mit einem Greifer; und Entnehmen des Werkstückes aus dem Behälter. Gemäß diesem Aspekt wird der Greifer über ein Flächenportal mit mindestens zwei und bevorzugt drei Linearachsen und mindestens zwei zusätzlichen rotatorischen Achsen bewegt. Besonders bevorzugt kommt zum Bewegen des Greifers dabei neben der rotatorischen Achsen ein Greifarmelement mit mindestens einer und bevorzugt zwei Bewegungsachsen zum Einsatz.

Vorteilhafterweise wird das erfindungsgemäße Verfahren dabei so durchgeführt, wie dies bereits oben beschrieben wurde. Insbesondere können die zwei weiteren Bewegungsachsen des Greifarmelementes dabei als reine Stellachsen dienen, während die eigentliche Greifbewegung des Greifers wie üblich über das Flächenportal erfolgt. Alternativ können die zwei weiteren Bewegungsachsen als vollwertige NC-Achsen in die Robotersteuerung integriert werden und damit eine synchronisierte Bewegung zulassen.

Erfindungsgemäß erfolgt das erfindungsgemäße Verfahren dabei unter Verwendung einer erfindungsgemäßen Vorrichtung, wie sie oben beschrieben wurde.

Die vorliegende Erfindung umfasst weiterhin ein Computerprogramm gemäß Anspruch 12 zur Durchführung des erfindungsgemäßen Verfahrens, wie es oben beschrieben wurde. Hierbei handelt es sich um ein Computerprogramm zur Implementierung einer Steuerung für eine Vorrichtung, wie sie oben beschrieben wurde. Das erfindungsgemäße Computerprogramm kann dabei beispielsweise auf einem Datenträger oder im Speicher einer Steuerung abgespeichert sein.

Die vorliegende Erfindung wird nun anhand von Ausführungsbeispielen sowie Zeichnungen näher beschrieben.

Dabei zeigen:

Figur 1: ein nicht-beanspruchtes Beispiel einer Vorrichtung, bei welchem der Greifer über ein Greifarmelement mit zwei weiteren Bewegungsachsen an einem sechsachsigen Industrieroboter angeordnet ist,

Figur 2: eine Detailansicht des dabei eingesetzten Greifarmelementes,

Figur 3: eine Prinzipdarstellung zur Erläuterung der Abmessungen eines Greifarmelementes in Bezug auf die Abmessungen eines Behälters und/oder der Werkstücke und

Figur 4: ein Ausführungsbeispiel einer erfindungsgemäßen Vorrichtung, bei welcher ein erfindungsgemäßes Greifarmelement an einem Flächenportal angeordnet ist.

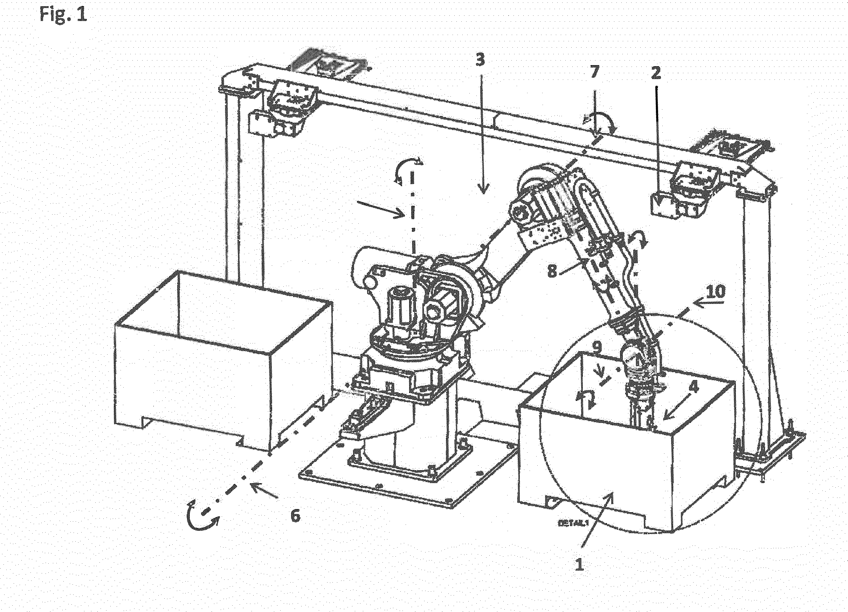

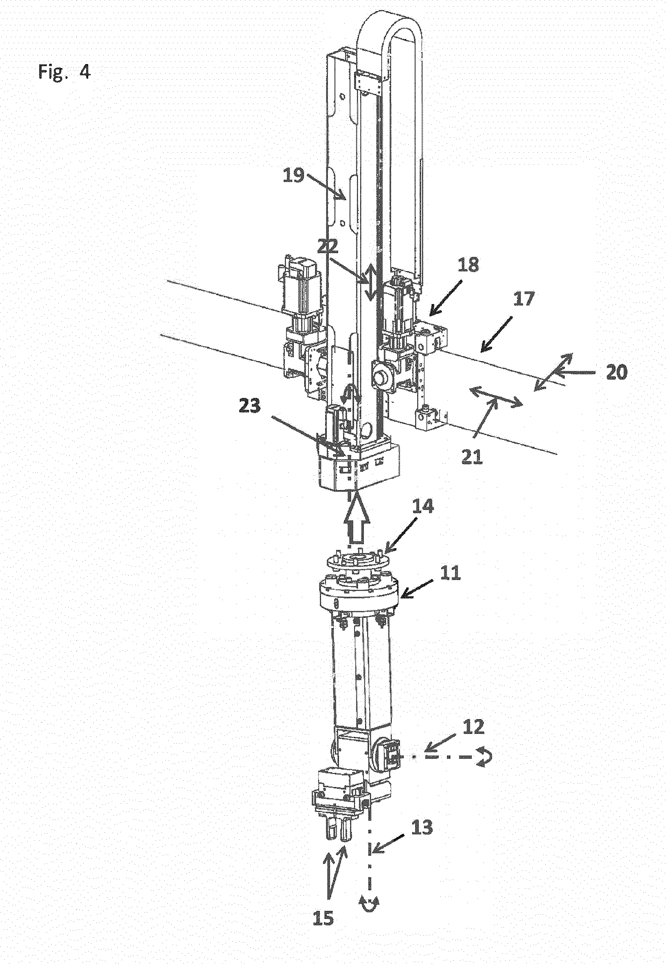

Fig. 4 zeigt ein Ausführungsbeispiel einer erfindungsgemäßen Vorrichtung, welche zum Entnehmen von in einem Behälter 1 angeordneten Werkstücken dient, wobei einzelne Elemente der Vorrichtung anhand der nicht beanspruchten Ausgestaltung gemäß Fig. 1, bei welcher anstelle des Flächenprotals ein Roboterarm eingesetzt wird, beschrieben werden. Insbesondere sind die Werkstücke dabei ungeordnet im Behälter 1 angeordnet.

Dabei ist eine Erfassungseinheit 2 vorgesehen, welche die im Behälter befindlichen Werkstücke erfasst. Insbesondere kann es sich dabei um einen Laserscanner, insbesondere um einen 3D-Laserscanner handeln. Die Erfassungseinheit ist oberhalb des Behälters angeordnet und sieht so in diesen hinein. Erfindungsgemäß ist dabei eine Steuerung vorgesehen, welche die von der Erfassungseinheit 2 generierten Daten auswertet. Hierdurch werden die im Behälter befindlichen Werkstücke identifiziert und ein zum Greifen geeignetes Werkstück ausgewählt. Anhand der Positionsdaten des ausgewählten Werkstückes erfolgt dann eine Bahnplanung für die Bewegungsbahn des Greifers.

Der Greifer wird dabei bei dem in Fig. 1 gezeigten nicht beanspruchten Ausführungsbeispiel über einen Industrieroboter 3 angesteuert, dessen Roboterarm sechs Achsen aufweist. Insbesondere ist der Roboterarm dabei über eine erste vertikale Drehachse 5 auf einem Podest angeordnet, wobei ein erster Schwenkarm über eine Schwenkachse 6 an einem Basiselement des Roboterarms angeordnet ist. Am ersten Schwenkarm ist ein zweiter Schwenkarm über eine Schwenkachse 7 angeordnet. Dieser Schwenkarm weist eine Drehachse 8 auf, und trägt eine weitere Schwenkachse 9. An dieser ist ein dritter Schwenkarm angeordnet, welcher wiederum eine Drehachse 10 aufweist.

Dabei ist am Ende dieses Roboterarms ein Greifarmelement 4 angeordnet, welches zwei weitere Bewegungsachsen aufweist. Am Ende des Greifarmelementes ist dann der Greifer angeordnet, über welchen das Werkstück gegriffen werden kann.

Im Ausführungsbeispiel handelt es sich bei dem Greifer dabei um einen mechanischen Greifer. Alternativ könnte jedoch auch ein magnetischer oder pneumatischer Greifer zum Einsatz kommen.

Die zwei weiteren Bewegungsachsen des Greifarmelementes erlauben ein Greifen auch von solchen Werkstücken, welche beispielsweise in einer Position ganz an einer Seitenwand der Kiste 1 angeordnet sind und so ohne die zusätzlichen Achsen nicht ordnungsgemäß gegriffen werden könnten. Insbesondere können so auch Werkstücke mit nur einer einzigen möglichen Greifzone, welche exakt aus der richtigen Richtung angefahren werden muss, gegriffen werden.

Die Ansteuerung kann dabei erfindungsgemäß so erfolgen, dass die beiden zusätzlichen Achsen des Greifarmelementes als reine Stellachsen angesteuert werden. Die Steuerung berechnet damit lediglich die zum Greifen des ausgewählten Werkstückes benötigte Endposition der letzten beiden Achsen. Die beiden Achsen des Greifarmelementes werden dann vor dem eigentlichen Greifvorgang in die so berechnete Zielposition gefahren.

Bei der Ansteuerung des Roboterarms 3 wird die Position der beiden Bewegungsachsen des Greifarmelementes dann nur im Hinblick auf die hierdurch veränderte Nullposition des Greifers, d.h. die geänderte Position des Greifers relativ zum letzten Schwenkarm des Roboterarms, sowie die durch diesen gebildeten Störkanten berücksichtigt. Ansonsten erfolgt die Bahnplanung für die Bewegung des Greifers für den Greifvorgang anhand der üblichen sechs Achsen des Roboterarms, und kann somit mit der Standardsoftware des Roboters durchgeführt werden.

Alternativ kann vorgesehen sein, dass die zusätzlichen Achsen als zusätzliche vollwertige NC-Achsen in der Robotersteuerung integriert sind und damit eine synchrone Bewegung zulassen.

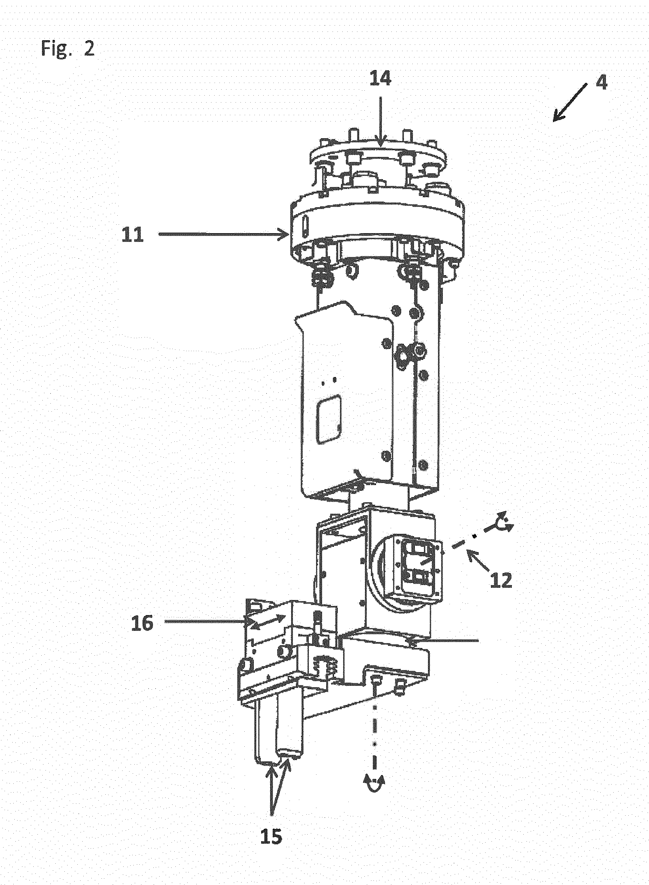

In Figur 2 ist ein bevorzugtes Ausführungsbeispiel eines Greifarmelementes 4 dargestellt. Dieses kann über die Verbindungseinheit 14 mit dem Ende des Roboterarms verbunden werden.

Bei den beiden Bewegungsachsen handelt es sich im Ausführungsbeispiel um rotatorische Achsen. Insbesondere ist dabei eine Schwenkachse 12 vorgesehen, welche im Ausführungsbeispiel senkrecht auf der letzten Drehachse 10 des Roboterarms steht. Weiterhin ist eine Drehachse 13 vorgesehen, welche dann wiederum senkrecht auf der Schwenkachse 12 steht.

Das Greifarmelement ist weiterhin mit einer Ausgleichseinheit 11 ausgestattet, welche zwischen dem Roboterarm und der ersten Bewegungsachse des Greifarmelementes angeordnet ist. Die Ausgleichseinheit 11 erlaubt so bei einer Kollision des Greifers mit Störkanten eine gewisse Ausgleichsbewegung des gesamten Greifarmelementes.

Das Greifarmelement bildet eine Greifarmverlängerung, wobei der Großteil des Roboterarms selbst überhaupt nicht mehr in den Behälter hineingeführt werden muss und somit auch keine Störkante mehr bildet, welche berücksichtigt werden müsste. Bevorzugt sind dabei die beiden Bewegungsachsen am unteren Ende des Greifarmelementes angeordnet. Bevorzugt muss dabei der Roboterarm oberhalb der Schwenkachse 9, d. h. bis auf den letzten Schwenkarm, nicht in den Behälter gefahren werden, und bildet damit keine Störkante.

Im Ausführungsbeispiel handelt es sich bei dem Greifer um einen mechanischen Greifer mit zwei Greiffingern 15, welche über einen Antrieb 16 aufeinander zu- und voneinander weg bewegt werden können. Die Greiffinger 15 sind dabei an der Außenkante des Greifarmelementes angeordnet, so dass das Greifarmelement keine Störkante aufweist, welche auf der Außenseite über die Greiffinger 15 hinausreichen würde. Die Verbindungslinie der Greiffinger 15 und damit die Bewegungsrichtung der Greiffinger verläuft dabei tangential zur Drehachse 13.

Weiterhin ist der Greifer gekröpft an dem Greifarmelement angeordnet. Insbesondere ist dabei der Greifer seitlich gegenüber der letzten Drehachse 13 versetzt angeordnet. Insbesondere ist dabei die Verbindungslinie der Greiffinger 15 gegenüber der Drehachse 13 nach außen versetzt. Hierdurch können Werkstücke, welche beispielsweise nahe an einer Seitenwand angeordnet sind, dennoch leicht gegriffen werden.

Insbesondere kann so der Greifer bis an die Seitenwand des Behälters herangefahren werden, während das übrige Greifarmelement immer noch einen ausreichenden Abstand zur Seitenwand aufweist.

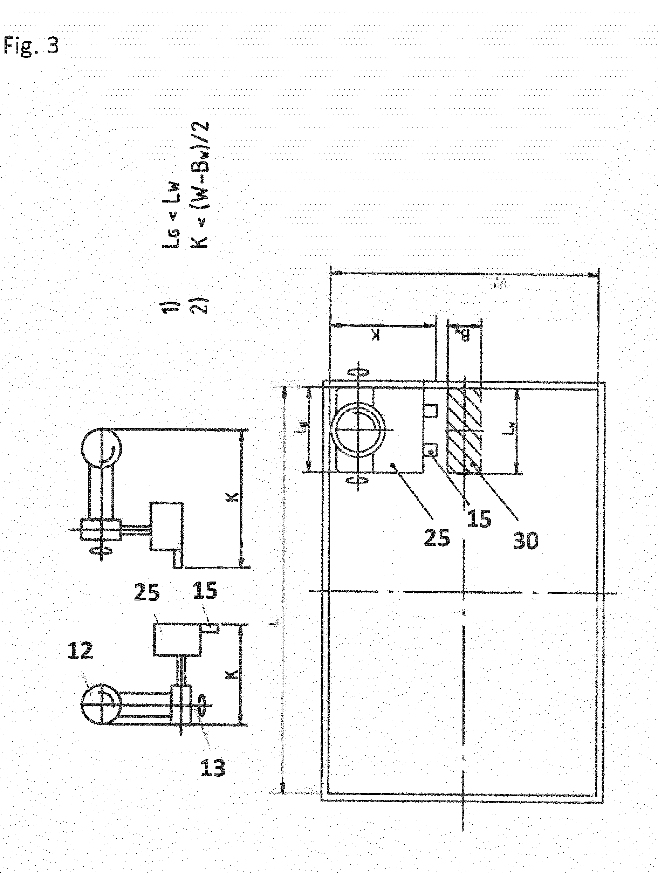

Wie anhand von Fig. 3 näher erläutert, weist das Greifarmelement dabei in Bezug auf den Behälter und/oder die Werkstücke, welche gegriffen werden sollen, solche Abmessungen auf, dass das Greifarmelement unabhängig von der Position des zu greifenden Werkstückes innerhalb des Behälters in der zum Greifen notwendigen Greifposition in den Behälter eingeführt werden kann.

Der Behälter 1 weist dabei eine rechteckige Grundfläche auf, wobei die Länge der längeren Seitenfläche des Behälters mit L angegeben ist und die Länge der kürzeren Seitenfläche mit W. Das Werkstück 30 weist in Eingreifrichtung des Greifers in das Werkstück eine Dicke Bw auf, und senkrecht hierzu in Richtung der Verbindungslinie der beiden Greifpunkte, an welchen die Greiffinger des Greifers ansetzen, eine Länge Lw.

Für die Manövrierbarkeit des Greifers ist dabei insbesondere die maximale Kröpfung K des Greifers in Bezug auf die Schwenkachse 12 von entscheidender Bedeutung. In den beiden kleinen Figuren in Fig. 3 ist dabei dargestellt, dass die Kröpfung K des Greifers in Bezug auf die Schwenkachse 12 von der Schwenkstellung dieser Achse abhängt. Die maximale Kröpfung ist damit der Wert, der sich bei der ungünstigsten Stellung der Schwenkachse ergibt und stellt dabei insbesondere den maximale Abstand zwischen der Außenkante der Schwenkachse 12 und der Außenkante des Greifers 25 inklusive den Greifelementen 15 dar.

Bevorzugt weist das Greifarmelement in Bezug auf den Behälter dabei die Abmessungen

$$K < (W-Bw)/2,$$

auf, kann also auch bei einem wie in Fig. 3 dargestellten im Behälter in Bezug auf die Schmalseite mittig angeordneten Werkstück 30 noch seitlich neben dem Werkstück in die Kiste gefahren werden.

Weiterhin bevorzugt weist das Greifarmelement in Bezug auf das Werkstück die Abmessungen

$$Lg < Lw$$

auf, wobei Lg die Länge des Greifers in Bewegungsrichtung der Greifelemente des Greifers darstellt, so dass der Greifer bei einem wie in Fig. 3 dargestellt an einer Seitenwand platzierten Werkstück dennoch an dieses herangefahren werden kann.

In Figur 4 ist nun ein Ausführungsbeispiel einer erfindungsgemäßen Vorrichtung dargestellt. Dabei wird kein Roboterarm zum Bewegen des Greifers eingesetzt, sondern ein Flächenportal. Das Flächenportal weist dabei drei lineare Bewegungsachsen 20 bis 22 auf. Insbesondere ist dabei ein seitlich verfahrbarer Portalbalken 17 vorgesehen, an welchem ein Schlitten 18 in Richtung 21 bewegbar ist. Am Schlitten 18 ist wiederum ein Balken 19 in vertikaler Richtung 22 bewegbar.

An diesem Flächenportal ist nun über eine rotatorische Achse 23, insbesondere eine Drehachse, das in Figur 2 gezeigte Greifarmelement mit zwei weiteren Bewegungsachsen angeordnet. Bei dem in Figur 4 gezeigten Ausführungsbeispiel werden damit sechs Bewegungsachsen, d. h. drei lineare Bewegungsachsen und drei rotatorische Bewegungsachsen, zum Bewegen des Greifers eingesetzt.

Alternativ könnte jedoch auf eine der drei rotatorischen Bewegungsachsen verzichtet werden, beispielsweise auf die rotatorische Achse 23 oder eine der beiden Achsen des Greifarmelementes. Dies reicht in einfacheren Fällen aus, um Werkstücke sicher und gezielt zu greifen.

Alternativ zum Einsatzes eines Flächenportals mit 3 Linearachsen könnte auch ein Flächenportal mit nur 2 Linearachsen eingesetzt werden, wobei die fehlende Linearachse durch eine oder mehrere weitere Rotationsachsen, insbesondere zwei oder drei Rotationsachsen, ersetzt wird. Insbesondere könnte dabei die z-Achse des in Fig. 4 gezeigten Flächenportals in dieser Weise ersetzt werden.

Die Ansteuerung des Ausführungsbeispiels in Fig. 4 kann dabei analog zur Ansteuerung des nicht beanspruchten Ausführungsbeispiels in Fig. 1 erfolgen. Insbesondere können auch hier die Achsen des Greifarmelementes und/oder die zusätzliche rotatorische Achse als reine Stellachsen betrieben werden, während das eigentliche Heranfahren an das Werkstück über das Flächenportal erfolgt.

Die vorliegende Erfindung ermöglicht so ein prozesssicheres Greifen von Werkstücken, welche so direkt aus einem Behälter entnommen und an einer Zielaufnahme abgelegt werden können.

Weiterhin lässt sich durch die vorliegende Erfindung auch eine 100%-ige Entleerung des Behälters erreichen.

**Patentansprüche**

1. Vorrichtung zum automatisierten Entnehmen von in einem Behälter (1) angeordneten Werkstücken,

   mit einer Erfassungseinheit zum Erfassen der Werkstücke (1) und einem Greifer (15) zum Greifen und Entnehmen der Werkstücke aus dem Behälter (1), und einer Steuerung zur Auswertung der Daten der Erfassungseinheit, zur Bahnplanung und zur Ansteuerung des Greifers,
   wobei der Greifer (15) über ein Flächenportal mit mindestens 2 und bevorzugt 3 Linearachsen (20, 21, 22) und mindestens zwei zusätzlichen rotatorischen Achsen (12, 13) bewegbar ist.

2. Vorrichtung nach Anspruch 1, wobei der Greifer (15) an einem Greifarmelement (4) angeordnet ist, welches zusätzlich zu den zwei oder drei Linearachsen (20, 21, 22) des Flächenportals und ggf. einer weiteren rotatorischen Achse mindestens eine und bevorzugt zwei weitere Bewegungsachsen (12, 13) zur Verfügung stellt.

3. Vorrichtung nach Anspruch 2, wobei das Greifarmelement (4) mindestens zwei rotatorische Achsen (12, 13) aufweist, insbesondere ein Dreh- und ein Schwenkwerk, wobei vorteilhafterweise das Drehwerk (13) zwischen dem Greifer (15) und dem Schwenkwerk (12) angeordnet ist und/oder wobei es sich bei dem Greifer (15) um einen mechanischen Greifer handelt, insbesondere um einen Finger- oder eine Backengreifer, insbesondere um einen Zwei-Finger-Greifer oder einen Zwei-Backen-Greifer, wobei bevorzugt die Greiffinger bzw. Greifbacken an einer Außenkante des Greifers (15) angeordnet sind, wobei weiterhin vorteilhafterweise die Verbindungslinie zwischen den zwei Fingern bzw. den zwei Backen gegenüber der Drehachse der letzten rotatorischen Achse (13) nach außen versetzt ist.

4. Vorrichtung nach einem der vorangegangenen Ansprüche, wobei der Greifer (15) gekröpft an dem Greifarmelement (4) angeordnet ist, wobei vorteilhafterweise die Mittelachse des Greifer gegenüber der Drehachse (13) der letzten rotatorischen Achse, insbesondere des Drehwerks, versetzt angeordnet ist und/oder wobei vorteilhafterweise weiter oben am Greifarm (4) angeordnete Elemente keine Störkanten zum Greifer bilden.

5. Vorrichtung nach einem der vorangegangenen Ansprüche, wobei das Greifarmelement (4) dabei in Bezug auf den Behälter (1) und/oder die Werkstücke, welche gegriffen werden sollen, solche Abmessungen auf, dass das Greifarmelement (4) unabhängig von der Position des zu greifenden Werkstückes innerhalb des Behälters in der zum Greifen notwenigen Greifposition in den Behälter eingeführt werden kann.

6. Vorrichtung nach einem der vorangegangenen Ansprüche, wobei das Greifarmelement (4) in Bezug auf den Behälter (1) die Abmessungen

$$K < W/2$$

aufweist, wobei K den maximalen Abstand zwischen der Außenkante der vorletzten Achse des Greifarmelementes (4) und der Außenkante des Greifers (15) darstellt, und W die Länge der kleineren Seitenfläche des Behälters (1), wobei vorteilhafterweise das Greifarmelement (4) in Bezug auf den Behälter (1) und das Werkstück die Abmessungen

$$K < (W-Bw)/2$$

aufweist, wobei Bw die Dicke des Werkstückes in Eingreifrichtung des Greifers in das Werkstück darstellt.

7. Vorrichtung nach einem der vorangegangenen Ansprüche, wobei das Greifarmelement (4) in Bezug auf das Werkstück die Abmessungen

$$Lg < Lw$$

aufweist, wobei Lg die Länge des Greifers in Bewegungsrichtung der Greifelemente des Greifers, insbesondere in Richtung der Verbindungslinie zwischen den zwei Fingern bzw. den zwei Backen eines Zwei-Finger-Greifers oder eines Zwei-Backen-Greifers, darstellt und Lw die maximale Länge des Werkstückes in einer Verbindungsrichtung zwischen zwei Greifpunkten des Werkstückes darstellt.

8. Vorrichtung nach einem der vorangegangenen Ansprüche, wobei es sich um einen Finger- und/oder Backengreifer handelt, dessen Greiffinger bzw. Greifbacken an einer Außenkante des Greifers angeordnet sind, wobei es sich insbesondere um einen 2-Finger-Greifer bzw. einen 2-Backen-Greifer handelt, und/oder wobei das Greifarmelement so am Roboterarm bzw. Flächenportal angeordnet ist, dass zum Greifen von Werkstücken immer nur der Greifarm und ggf. der letzte Schwenkarm des Flächenportals, an welchem der Greifarm angeordnet ist, in den Behälter (1) hineingeführt werden müssen, selbst wenn das zu greifende Werkstück am Boden des Behälters angeordnet ist und/oder wobei mindestens eine Ausgleichseinheit (11) vorgesehen ist, welche bei Kollisionen des Greifers (15) eine Ausweichbewegung erlaubt, wobei die Ausgleichseinheit vorteilhafterweise eine Ausweichbewegung des gesamten Greifarmelementes (4) erlaubt und/oder wobei eine Ausgleichseinheit innerhalb der Greifarmverlängerung angeordnet ist, insbesondere eine Ausgleichseinheit (11) zum Ausgleich von Drehund/oder Schwenkbewegungen.

9. Vorrichtung nach einem der vorangegangenen Ansprüche, wobei die Steuerung die beiden Achsen (12, 13) des Greifarmelementes (4) als reine Stellachsen ansteuert, wobei die Steuerung vorteilhafterweise lediglich die notwendige Endposition dieser Achsen berechnet, welche ein Greifen des Werkstück erlaubt und/oder wobei die Steuerung vorteilhafterweise die Zustellung des Greifers an das Werkstück über eine Ansteuerung der übrigen Achsen veranlasst, wobei weiterhin vorteilhafterweise die Position der Stellachsen des Greifarmelementes von der Steuerung lediglich im Hinblick auf die geänderte Position des Greifers in Bezug auf den Roboterarm bzw. das Flächenportal und/oder die geänderten Störkanten des Greifarms berücksichtigt wird.

10. Vorrichtung nach einem der vorangegangenen Ansprüche, welche der automatisierten Positionierung der Werkstücke an einer Zielaufnahme dient, wobei die Steuerung den Greifer so bewegt, dass die Werkstücke von dem Behälter aus direkt an der Zielaufnahme angeordnet werden.

11. Verfahren zum automatisierten Entnehmen von in einem Behälter (4) angeordneten Werkstücken unter Verwendung einer Vorrichtung nach einem der Ansprüche 1 bis 10, mit den Schritten:

- Erfassen der Werkstücke,
- Greifen eines Werkstückes mit einem Greifer (15),
- Entnehmen des Werkstückes aus dem Behälter (1),

wobei der Greifer (15) über ein Flächenportal mit mindestens 2 und bevorzugt 3 Linearachsen (20, 21, 22) und mindestens zwei zusätzlichen rotatorischen Achsen (12, 13) bewegt wird, wobei zusätzlich zu den 3 Linearschen und ggf. einer rotatorischen Achse vorteilhafterweise ein Greifarmelement (4) mit mindestens einer und bevorzugt zwei weiteren Bewegungsachsen zum Einsatz kommt.

12. Computerprogramm zur Durchführung eines Verfahrens nach Anspruch 11 und zur Implementierung einer Steuerung für eine Vorrichtung nach einem der Ansprüche 1 bis 10, umfassend Befehle, die bei der Ausführung des Programms durch einen Computer diesen veranlassen, das Verfahren nach Anspruch 11 auszuführen.

**Claims**

1. A device for the automated removal of workpieces arranged in a container (1), comprising a detection unit for detecting the workpieces (1) and a gripper (15) for picking up and removing the workpieces from the container (1),

   and a controller for analysing the data from the detection unit, planning the path and controlling the gripper,
   wherein
   the gripper (15) can be moved by means of an area gantry having at least two and preferably three linear axes (20, 21, 22) and at least two additional rotational axes (12, 13).

2. The device according to claim 1, wherein the gripper (15) is arranged on a gripper arm element (4) which provides at least one and preferably two further axes of movement (12, 13) in addition to the two or three linear axes (20, 21, 22) of the area gantry and optionally a further rotational axis.

3. The device according to claim 2, wherein the gripper arm element (4) has at least two rotational axes (12, 13), in particular a rotation mechanism and a swivel mechanism, wherein advantageously the rotation mechanism (13) is arranged between the gripper (15) and the swivel mechanism (12) and/or wherein the gripper (15) is a mechanical gripper, in particular a finger gripper or a jaw gripper, in particular a two-finger gripper or a two-jaw gripper, wherein the gripper fingers or gripper jaws are preferably arranged on an outer edge of the gripper (15), wherein, moreover, the connecting line between the two fingers or the two jaws is advantageously offset outwards with respect to the rotary axis of the last rotational axis (13).

4. The device according to one of the preceding claims, wherein the gripper (15) is arranged offset on the gripper arm element (4), wherein advantageously the central axis of the gripper is arranged offset with respect to the rotary axis (13) of the last rotational axis, in particular the rotation mechanism, and/or wherein advantageously elements arranged further up on the gripper arm (4) do not form interfering edges with respect to the gripper.

5. The device according to one of the preceding claims, wherein the dimensions of the gripper arm element (4) with respect to the container (1) and/or the workpieces to be picked up are such that the gripper arm element (4) can be introduced into the container in the position necessary for picking up the workpiece, regardless of the position of the workpiece inside the container.

6. The device according to one of the preceding claims, wherein the gripper arm element (4) has the dimensions

$$K < W/2$$

   with respect to the container (1), where K is the maximum distance between the outer edge of the next-to-last axis of the gripper arm element (4) and the outer edge of the gripper (15), and W is the length of the shorter side of the container (1), wherein advantageously the gripper arm element (4) has the dimensions

$$K < (W-Bw)/2$$

   with respect to the container (1) and the workpiece, where Bw is the thickness of the workpiece in the direction in which the gripper engages with the workpiece.

7. The device according to one of the preceding claims, wherein the gripper arm element (4) has the dimensions

$$Lg < Lw$$

with respect to the workpiece, where Lg is the length of the gripper in the direction of movement of the gripper elements of the gripper, particularly in the direction of the connecting line between the two fingers or the two jaws of a two-finger gripper or a two-jaw gripper, and Lw is the maximum length of the workpiece in a connecting direction between two gripping points of the workpiece.

8. The device according to one of the preceding claims, wherein the gripper is a finger gripper and/or jaw gripper, the gripping fingers or gripping jaws of which are arranged on an outer edge of the gripper, wherein in particular it is a two-finger gripper or a two-jaw gripper, and/or wherein the gripper arm element is arranged on the robot arm or area gantry in such a way that only the gripper arm and optionally the last swivel arm of the area gantry on which the gripper arm is arranged needs to be introduced into the container (1) to pick up workpieces, even if the workpiece to be picked up is arranged on the floor of the container, and/or wherein at least one compensation unit (11) is provided which allows for an evasive movement of the gripper (15) in the event of a collision, wherein the compensation unit advantageously permits an evasive movement of the entire gripper arm element (4) and/or wherein a compensation unit is arranged within the gripper arm extension, in particular a compensation unit (11) for compensating rotary and/or swivel movements.

9. The device according to one of the preceding claims, wherein the controller controls the two axes (12, 13) of the gripper arm element (4) as simple positioning axes, wherein advantageously the controller simply calculates the necessary end position of these axes to enable a workpiece to be picked up, and/or wherein the controller advantageously initiates the advance of the gripper towards the workpiece by controlling the remaining axes, wherein, moreover, the position of the positioning axes of the gripper arm element is advantageously taken into account by the controller only as regards the changed position of the gripper with respect to the robot arm or the area gantry and/or the changed interfering edges of the gripper arm.

10. The device according to one of the preceding claims, which serves for the automated positioning of the workpieces at a target receptacle, wherein the controller moves the gripper in such a way that the workpieces are moved directly from the container to the target receptacle.

11. A method for the automated removal of workpieces arranged in a container (4) using a device according to one of claims 1 to 10, comprising the following steps:

- detecting the workpieces,
- picking up a workpiece with a gripper (15),
- removing the workpiece from the container (1),

wherein
the gripper (15) is moved by means of an area gantry having at least two and preferably three linear axes (20, 21, 22) and at least two additional rotational axes (12, 13), wherein a gripper arm element (4) having at least one and preferably two further axes of movement is advantageously used in addition to the three linear axes and optionally a rotational axis.

12. A computer program for carrying out a method according to claim 11 and for implementing a controller for a device according to one of claims 1 to 10, comprising commands which, when the program is executed by a computer, cause it to carry out the method according to claim 11.

**Revendications**

1. Dispositif de retrait automatisé de pièces agencées dans un récipient (1), comportant une unité de détection destinée à la détection des pièces (1) et un préhenseur (15) destiné à la préhension et au retrait des pièces hors du récipient (1),

   et une commande destinée à l'évaluation des données de l'unité de détection, à la planification de la trajectoire et au pilotage du préhenseur, dans lequel
   le préhenseur (15) peut être déplacé par le biais d'un portique en H avec au moins deux et de préférence trois axes linéaires (20, 21, 22) et au moins deux axes de mouvement de rotation (12, 13) supplémentaires.

2. Dispositif selon la revendication 1, dans lequel le préhenseur (15) est agencé sur un élément de bras de préhension (4), qui fournit, en plus des deux ou trois axes linéaires (20, 21, 22) du portique en H et le cas échéant d'un axe de mouvement de rotation en plus, au moins un et de préférence deux autres axes de mouvement (12, 13).

3. Dispositif selon la revendication 2, dans lequel l'élément de bras de préhension (4) présente au moins deux axes de mouvement de rotation (12, 13), en particulier un mécanisme de rotation et un mécanisme de pivotement, le mécanisme de rotation (13) étant agencé de manière avantageuse entre le préhenseur (15) et le mécanisme de pivotement (12) et/ou le préhenseur (15) étant un préhenseur mécanique, en particulier un préhenseur à doigts ou à pince, en particulier un préhenseur à deux doigts ou un préhenseur à deux mors, les doigts de préhension ou mors de préhension étant de préférence agencés sur un bord extérieur du préhenseur (15), la ligne de liaison entre les deux doigts ou les deux mors étant en outre décalée de manière avantageuse vers l'extérieur par rapport à l'axe de rotation du dernier axe de mouvement de rotation (13).

4. Dispositif selon l'une des revendications précédentes, dans lequel le préhenseur (15) est agencé coudé sur l'élément de bras de préhension (4), l'axe central du préhenseur étant, de manière avantageuse, agencé décalé par rapport à l'axe de rotation (13) du dernier axe de mouvement de rotation, en particulier du mécanisme de rotation et/ou des éléments agencés plus haut sur le bras de préhension (4) ne formant de manière avantageuse aucune arête gênante.

5. Dispositif selon l'une des revendications précédentes, dans lequel l'élément de bras de préhension (4) présente par rapport au récipient (1) et/ou aux pièces qui doivent être prises, des dimensions telles que l'élément de bras de préhension (4) peut être introduit dans le récipient dans la position de préhension requise pour la préhension, indépendamment de la position de la pièce à prendre à l'intérieur du récipient.

6. Dispositif selon l'une des revendications précédentes, dans lequel l'élément de bras de préhension (4) présente, par rapport au récipient (1), les dimensions

$$K < W/2$$

où K représente la distance maximale entre l'arête extérieure de l'avant-dernier axe de l'élément de bras de préhension (4) et l'arête extérieure du préhenseur (15) et W la longueur de la plus petite surface latérale du récipient (1), l'élément de bras de préhension (4) présentant de manière avantageuse, par rapport au récipient (1) et à la pièce, les dimensions

$$K < (W-Bw)/2$$

où Bw représente l'épaisseur de la pièce dans la direction de saisie du préhenseur dans la pièce.

7. Dispositif selon l'une des revendications précédentes, dans lequel l'élément de bras de préhension (4) présente, par rapport à la pièce, les dimensions

$$Lg < Lw$$

où Lg représente la longueur du préhenseur dans la direction de mouvement des éléments de préhension du préhenseur, en particulier dans la direction de la ligne de liaison entre les deux doigts ou les deux mors d'un préhenseur à deux doigts ou d'un préhenseur à deux mors, et Lw représente la longueur maximale de la pièce dans une direction de liaison entre deux points de préhension de la pièce.

8. Dispositif selon l'une des revendications précédentes, dans lequel il s'agit d'un préhenseur à doigts et/ou à pince, dont les doigts de préhension ou mors de préhension sont agencés sur une arête extérieure du préhenseur, dans lequel il s'agit en particulier d'un préhenseur à deux doigts ou d'un préhenseur à deux mors, et/ou dans lequel l'élément de bras de préhension est agencé sur le bras de robot ou le portique en H de telle manière que, pour la préhension de pièces, à chaque fois, seuls le bras de préhension et le cas échéant le dernier bras pivotant du portique en H sur lequel est agencé le bras de préhension doivent être insérés dans le récipient (1), même quand la pièce à prendre est agencée au fond du récipient, et/ou dans lequel au moins une unité de compensation (11) est prévue, laquelle permet un mouvement d'évitement en cas de collision du préhenseur (15), l'unité de compensation permettant de manière avantageuse un mouvement d'évitement de tout l'élément de bras de préhension (4) et/ou dans lequel une unité de compensation est agencée dans l'allongement du bras de préhension, en particulier une unité de compensation (11) destinée à compenser des mouvements de rotation et/ou de pivotement.

9. Dispositif selon l'une des revendications précédentes, dans lequel la commande pilote les deux axes (12, 13) de l'élément de bras de préhension (4) comme axes de positionnement uniquement, la commande calculant de manière avantageuse seulement la position finale nécessaire de ces axes, qui permet une préhension de la pièce, et/ou dans lequel la commande provoque, de manière avantageuse, l'avance du préhenseur vers la pièce par le biais d'un pilotage des axes restants, la position des axes de positionnement de l'élément de bras de préhension étant en outre de manière avantageuse prise en compte par la commande seulement en ce qui concerne la position modifiée du préhenseur par rapport au bras de robot ou au portique en H et/ou les arêtes gênantes modifiées du bras de préhension.

10. Dispositif selon l'une des revendications précédentes, qui sert au positionnement automatisé des pièces sur un élément de réception cible, la commande déplaçant le préhenseur de telle manière que les pièces sont agencées directement depuis le récipient sur l'élément de réception cible.

**11.** Procédé de retrait automatisé de pièces agencées dans un récipient (4) au moyen d'un dispositif selon l'une des revendications 1 à 10, comportant les étapes :

- détection des pièces,
- préhension d'une pièce avec un préhenseur (15),
- retrait de la pièce hors du récipient (1),

dans lequel
le préhenseur (15) est déplacé par le biais d'un portique en H avec au moins deux et de préférence trois axes linéaires (20, 21, 22) et au moins deux axes de mouvement de rotation (12, 13) supplémentaires, un élément de bras de préhension (4) avec au moins un et de préférence deux autres axes de mouvement étant utilisé de manière avantageuse en plus des trois axes linéaires et le cas échéant d'un axe de mouvement de rotation.

**12.** Programme informatique destiné à l'exécution d'un procédé selon la revendication 11 et à la mise en oeuvre d'une commande pour un dispositif selon l'une des revendications 1 à 10, comprenant des instructions qui, lors de l'exécution du programme par un ordinateur, amènent celui-ci à exécuter le procédé selon la revendication 11.

Fig. 1

EP 4 046 755 B1

Fig. 2

14

4

11

12

16

15

14

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101559597 A
- JP 2005014108 A
- DE 102005058867 A1
- WO 0151259 A2
- EP 1442848 A2
- US 20120063873 A1
- US 5835623 A